(19) Europäisches Patentamt

European Patent Office

Office européen des brevets

(11) **EP 2 669 792 B1**

(12) **EUROPEAN PATENT SPECIFICATION**

(45) Date of publication and mention
of the grant of the patent:
**19.07.2023 Bulletin 2023/29**

(21) Application number: **12739513.5**

(22) Date of filing: **18.01.2012**

(51) International Patent Classification (IPC):
***G06F 9/451*** *(2018.01)*    ***G06F 3/04817*** *(2022.01)*

(52) Cooperative Patent Classification (CPC):
**G06F 3/04817; G06F 9/451**

(86) International application number:
**PCT/CN2012/070524**

(87) International publication number:
**WO 2012/100700 (02.08.2012 Gazette 2012/31)**

(54) **METHOD AND DEVICE FOR IMPLEMENTING MANY DISPLAY MODES FOR GENERAL ICON**

VERFAHREN UND VORRICHTUNG ZUR EINRICHTUNG MEHRERER ANZEIGEMODI FÜR
ALLGEMEINE ICONS

PROCÉDÉ ET DISPOSITIF POUR LA MISE EN OEUVRE DE PLUSIEURS MODES D'AFFICHAGE
POUR UNE ICÔNE GÉNÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2011 CN 201110032532**

(43) Date of publication of application:
**04.12.2013 Bulletin 2013/49**

(73) Proprietor: **Tencent Technology (Shenzhen)
Company Limited
Shenzhen, Guangdong, 518057 (CN)**

(72) Inventor: **LI, Zhiyun
Guangdong 518044 (CN)**

(74) Representative: **Gunzelmann, Rainer
Wuesthoff & Wuesthoff
Patentanwälte PartG mbB
Schweigerstraße 2
81541 München (DE)**

(56) References cited:
**CN-A- 101 247 403**    **CN-A- 101 308 445**
**US-A- 5 283 560**    **US-A- 6 118 427**
**US-A1- 2008 307 342**    **US-A1- 2008 307 342**
**US-B1- 6 512 529**

# Description

## Field of the Invention

The present invention relates to image processing technologies, and more particularly to a method and device for implementing a generic icon with multiple display modes.

## Background of the Invention

A terminal device, especially a mobile terminal device, usually runs in different environments, such as an outdoor environment, an indoor environment, a day environment and a night environment. In order to make icons displayed on a display screen of the terminal device satisfy comfort requirements in different environments put forward by a user, icons in different display modes are provided for the user targeting at different environments. For instance, an icon in a normal mode needs to be adopted in the day environment, while an icon in a night mode needs to be adopted in the night environment. That is, multiple sets of skins applicable to different environments need to be prepared. Each skin set corresponds to a specific environment or display mode and includes multiple icons.

Description is given hereafter taking the icons in the normal mode and night mode of the existing mobile terminal device for example.

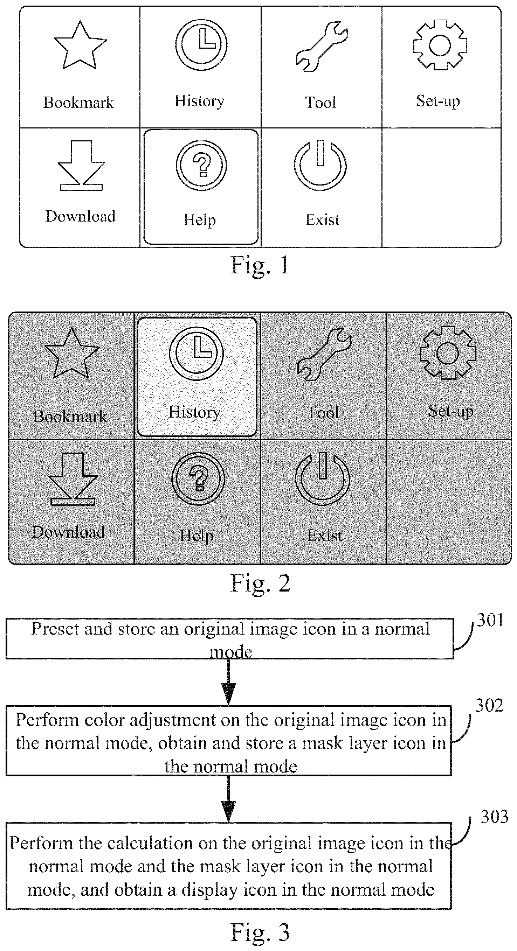

Referring to figures 1 and 2, figure 1 is a schematic diagram illustrating an icon displayed in a normal mode of an existing mobile terminal device, and figure 2 is a schematic diagram illustrating an icon displayed in a night mode of the existing mobile terminal device. Since requirements put forward by the user for viewing the icon in the normal mode are different from those for viewing the icon in the night mode. In the normal mode, the icon merely needs to guarantee that the icon may be normally identified and operated by the user. However, in the night mode, the icon not only needs to guarantee the normal identification, but also needs to consider the comfort of the user's eyes, so that the icon cannot glare, should have moderate colors and fuse with a dark environment. Therefore, images for forming a display icon are different, and operations need to be carried out on the basis of images in need of different processing. Due to problems existing in performances of a mobile terminal system and development tools, at the present stage, transparency and shadows of some icons and images on the mobile terminal software cannot be implemented with a full-transparent image in a Portable Network Graphic (PNG) format, bits of which are more than 24. Therefore, in order to present multiple sets of skins, the corresponding multiple sets of skins need to be stored. That is, a corresponding mask layer needs to be provided for each translucent or transparent display icon. For instance, if skin images of software A are cut and there are forty images in need of the transparent and translucent processing, in order to obtain a design effect of a User Interface (UI), a set of corresponding masks need to be provided for the forty images to generate the display icons. Therefore, an installation packet of the skin of the software A includes eighty images. In order to increase new skins, images, the color of which corresponds to the newly-added skin and masks thereof need to be cut.

Taking icons set in figures 1 and 2 for example, the method for generating the display icon in the normal mode and the display icon in the night mode is described hereafter.

Referring to figure 3, figure 3 is a flow chart illustrating an existing method for generating a display icon in a normal mode. The flow includes the following blocks.

At block 301, an original image icon in a normal mode is preset and stored.

In this block, the background of the original image icon in the normal mode is configured as white, a color value is #ffffff, and the white is defined as opaque.

At block 302, the color of the original image icon in the normal mode is adjusted to obtain a mask layer icon in the normal mode, and the mask layer icon in the normal mode is stored.

In this block, the color of the original image icon in the normal mode is adjusted and processed to obtain the mask layer icon in the normal mode. The background of the mask layer icon in the normal mode is configured as black. The color value is #000000, and black is defined as full-transparent.

The above block 301 to block 302 are executed at the network side. After obtaining relevant processing images in relevant display modes, the relevant processing images are encapsulated into a skin installation package at the network side, and sent to the mobile terminal side.

At block 303, calculations are performed on the original image icon in the normal mode and mask layer icon in the normal mode to obtain a display icon in the normal mode.

In this block, the mobile terminal device receives the skin installation package. After the calculation is performed on the original image icon in the normal mode and the mask layer icon in the normal mode, i.e. the translucent effect is implemented with gray color in the mask, so that the original image icon after the transparent processing is overlapped with the background, a transparent background layer icon with a 256-color channel is obtained. That is, the display icon in the normal mode which may be directly seen by the user is presented.

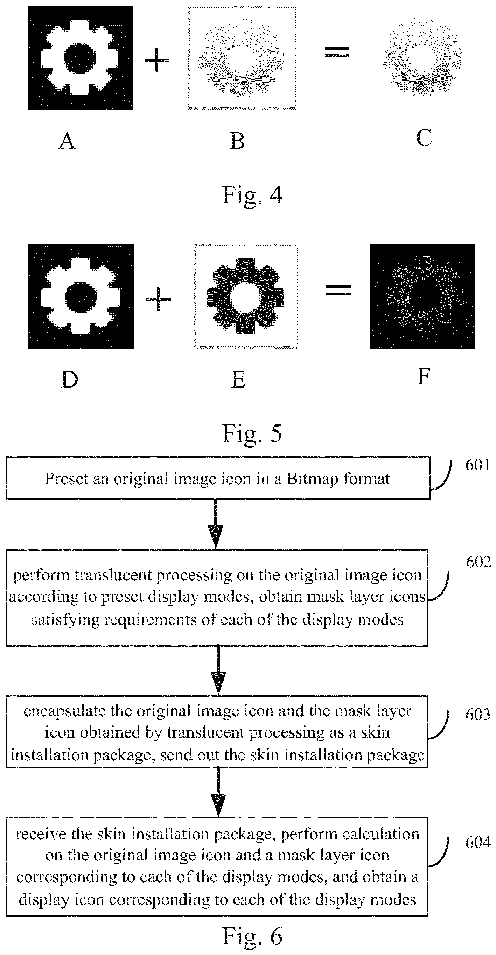

Referring to figure 4, figure 4 is a schematic diagram illustrating an existing process for generating the display icon "set-up" in the normal mode. In this figure, A is the mask layer icon in the normal mode, B is the original image icon in the normal mode, and C is the display icon in the normal mode.

As for the night mode, the flow for generating the display icon is similar to that in figure 3. Different from figure 3, since factors considered when generating the display icon in the night mode are different, color adjustment and screenshot needs to be performed on the original image icon in the normal mode to obtain the mask layer icon in the night mode and the original image icon in the night mode. Calculation is performed on the obtained original image icon in the night mode and the mask layer icon in the night mode to obtain the display icon in the night mode.

Referring to figure 5, figure 5 is a schematic diagram illustrating an existing method for generating the display icon "set-up" in the night mode. In the figure, D is the mask layer icon in the night mode, E is the original image icon in the night mode, and F is the display icon in the night mode. A differs from D in the adjustment of the color and the level that the transparency is processed. B also differs from E in the adjustment of the color and the level that the transparency is processed.

It can be seen from the above that the existing method for generating the display icon in the normal mode and the display icon in the night mode needs to adjust the color of the image, and respectively performs image cut to obtain the corresponding original image icon and mask layer icon. Then, the mobile terminal device performs calculation to obtain the display icons in the skin. In this way, the skin installation package has to include many images, and a large amount of memory resources of the mobile terminal device need to be consumed. At the same time, the size of the installation package is large, which increases the overhead for downloading wireless resources and the cost of the users.

Document US6118427 discloses a system and method for displaying images of objects. More particularly, the present invention relates to graphical user interfaces providing variably-transparent layered objects and optimizing the degree of transparency for maximum user and system performance.

## Summary

In view of this, the main object of the present invention is to provide a method for implementing a generic icon with multiple display modes, to reduce the number of the images in the skin installation package and the cost of the downloading made by the user.

Another object of the present invention is to provide a device for implementing a generic icon with multiple display modes, to reduce the number of the images in the skin installation package and the cost of the downloading made by the user.

In order to achieve the above objects, the present invention provides a method for implementing a generic icon with multiple display modes, including:

presetting an original image icon in a Bitmap format, wherein the background of the original image icon is pre-set as white, which is full-transparent; adjusting color depth of gray of the original image icon according to the preset display modes and a characteristic that the gray between the white and black is defined as translucency and different color depth of the gray represents different transparency to obtain the mask layer icons satisfying the requirements of each of the display modes; and encapsulating the original image icon and the mask layer icons into a skin installation package, and sending the skin installation package to a mobile terminal device, wherein the mask layer icons are obtained by performing the translucent processing on the original image icon.

It can be seen from the above technical scheme that the present invention provides a method and device for implementing a generic icon with multiple display modes. An original image icon in a Bitmap format is preset, translucent processing is performed on the original image icon according to preset display modes, a mask layer icon satisfying requirements of each of the display modes is obtained, the original image icon and the mask layer icon obtained by translucent processing are encapsulated into a skin installation package, and the skin installation package is sent to the mobile terminal device. Therefore, by performing the translucent processing on the original image icon according to the display modes, the mask layer icon with multiple display modes may be obtained by performing the transparent processing on the original image icon. While the original image icon in multiple display modes may share the same icon, by which the number of the images in the software installation package and the cost of the downloading made by the user may be reduced.

## Brief Description of Drawings

Figure 1 is a schematic diagram illustrating icons displayed on an existing mobile terminal device in a normal mode.

Figure 2 is a schematic diagram illustrating icons displayed on the existing mobile terminal device in a night mode.

Figure 3 is a flow chart illustrating an existing method for generating a display icon in a normal mode.

Figure 4 is a schematic diagram illustrating an existing method for generating display icon "set-up" in the normal mode.

Figure 5 is a schematic diagram illustrating an existing method for generating the display icon "set-up" in the night mode.

Figure 6 is a flow chart illustrating a method for implementing a generic icon with multiple display modes.

Figure 7 is a schematic diagram illustrating how the display icon "set-up" in the normal mode is generated in accordance with an embodiment of the present invention.

Figure 8 is a schematic diagram illustrating how the display icon "set-up" in the night mode is generated in accordance with an embodiment of the present invention.

Figure 9 is a schematic diagram illustrating structure of a device for generating a generic icon with multiple display modes.

## Detailed Description of the Invention

The present invention is further described in detail hereinafter with reference to the accompanying drawings to make the objective, technical solution and merits thereof more apparent.

In the conventional method, due to personalized needs of the mobile terminal device, software User Interface (UI) has a lot of skins. A display icon in each mode needs to perform calculations on an original icon and a mask layer icon in the corresponding mode, so that a skin installation package includes a lot of images, and the cost of the downloading made by the user is high. In embodiments of the present invention, taking into account that a Bitmap (BMP) file has an image file format unrelated to a hardware device. BMP gray has a translucent characteristic. Based on a same BMP original image icon, icon brightness suitable for different modes is obtained via changing transparency of the BMP original image icon. Therefore, processing, such as color adjustment and image cut needs not to be performed on the original image icon, which may satisfy the viewing requirements put forward by the user on the display icons in different modes.

Referring to figure 6, figure 6 is a flow charting illustrating a method for implementing a generic icon with multiple display modes. The flow includes the following steps.

In block 601, an original image icon in a BMP format is pre-set.

In this block, the background of the original image icon is pre-set as white. That is, the color value is #ffffff, and the white is defined as full-transparent.

In block 602, translucent processing is performed on the original image icon according to the preset display modes to obtain mask layer icons satisfying requirements of each of the display modes.

In this block, the preset display mode includes the normal mode and the night mode. Certainly, in practice, along with the change of the users' requirements and the enhancement of the users' comfort requirements, more modes may be set. The requirements put forward by each display mode on the images are preset.

Taking the preset display modes including the normal mode and the night mode for example, the method for respectively performing translucent processing on the original image icon includes the following steps.

Steps for the translucent processing in the normal mode include reading the stored original image icon, and adjusting the transparency of the original image icon to make an image effect satisfy the requirements put forward by the user for viewing the image in the normal mode and obtain the mask layer icon in the normal mode. The background is configured as black, the color value is #000000, and the black is defined as full-transparent.

Steps for the translucent processing in the night mode include reading the stored original image icon, and adjusting the transparency of the original image icon to make the image effect satisfy the requirements put forward by the user for viewing the image in the night mode and obtain the mask layer icon in the night mode. A background is configured as black, the color value is #000000, and an image is gray after the translucent processing. That is, the gray between the white and the black is defined as translucency. The characteristic that different color depth of the gray represents different transparency is utilized. Specifically speaking, the original image icon in the normal mode, i.e. the stored original image icon is adopted, and then the transparency of the original image icon is adjusted to make it suitable for the brightness of the display icon in the night mode. Then, the image with the adjusted transparency is processed. For instance, if the black is configured as opaque and the white is configured as full-transparent, the icon with the adjusted transparency is filled with the while color, and a black image layer is added behind the icon to obtain a gray mask. Therefore, in the night mode, the transparency of the corresponding icon may be implemented using the obtained gray mask, to achieve the purpose that the night mode and the normal mode use a same original image icon.

In practice, the original image icon and the mask layer icons obtained by the translucent processing may be stored.

In block 603, the original image icon and the mask layer icons obtained by the translucent processing are encapsulated into the skin installation package and sent out.

In this block, the images in the skin installation package include the original image icon, the mask layer icon in the normal mode and the mask layer icon in the night mode. Different icons may be distinguished with identifiers. Compared with the images included in the existing skin installation package, the original image icon in the night mode is not included in the present installation package.

Therefore, as for the skin installation package with n (n is a natural number) display modes, and the number of sets of the images in the skin installation pack-

age is:

$$N = 2n - (n-1) = n+1$$

In the formula, N is the number of sets of the images in the skin installation package with n modes.

Wherein, n is the natural number, and 2n denotes the number of sets of the images in the existing skin installation package with n modes.

For example, as for the skin installation package with two display modes, i.e. the normal mode and the night mode, the number of the image sets is 3 sets, i.e. one set of original image icon, one set of mask layer icon in the normal mode and one set of mask layer icon in the night mode. As for the existing skin installation package with two modes, i.e. the normal mode and the night mode, the number of the image sets is 4 sets, i.e. one set of the original image icon in the normal mode, one set of the original image icon in the night mode, one set of the mask layer icon in the normal mode and one set of the mask layer icon in the night mode. Compared with the existing skin installation package, the skin installation package in the present invention does not include the original image icon in the night mode, by which a quarter of images are reduced. That is, if there is one type of display mode included in the skin installation package, the capacity of the skin installation package is the same as that in the conventional method, while, as for the skin installation package with two or more display modes, the capacity of the skin installation package may be greatly reduced.

After the mobile terminal device receives the skin installation package, the method further includes the following steps.

In block 604, the skin installation package is received. Calculation is performed on the original image icon and the mask layer icons corresponding to each of the display modes, and a display icon corresponding to each of the display modes are obtained.

In this block, after performing the calculation on the original image icon and the corresponding mask layer icons, i.e. the translucent effect is achieved with the gray in the mask, and the icon after the transparent processing is overlapped with the background. A transparent background layer icon with the 256-color channel is obtained. That is, the display icons corresponding to each of the display modes which may be directly seen by the user are presented to the user.

In view of the above, as for the normal mode, the original image icon and the mask layer icon in the normal mode obtained by performing the translucent processing on the original image icon are read from the skin installation package. Then calculation is performed on the original image icon and the corresponding mask layer icon in the normal mode, and the display icon in the normal mode is obtained. That is, the display icon which may be directly seen by the user is presented to the user. For instance, as for a bookmark display icon in figure 1, a bookmark original image icon and a bookmark mask layer icon in the normal mode are read from the skin installation package. Calculation is performed and a bookmark display icon is obtained. Other display icons, such as history, tool, set-up, download, help, and release may be obtained with the same method as that for obtaining the bookmark display icon.

As for the night mode, the original image icon and the mask layer icon in the night mode obtained by performing the translucent processing on the original image icon are read from the skin installation package. Calculation is performed on the original image icon and the corresponding mask layer icon in the night mode to obtain the display icon in the night mode. That is, the display icon in the night mode which may be directly seen by the user is presented to the user.

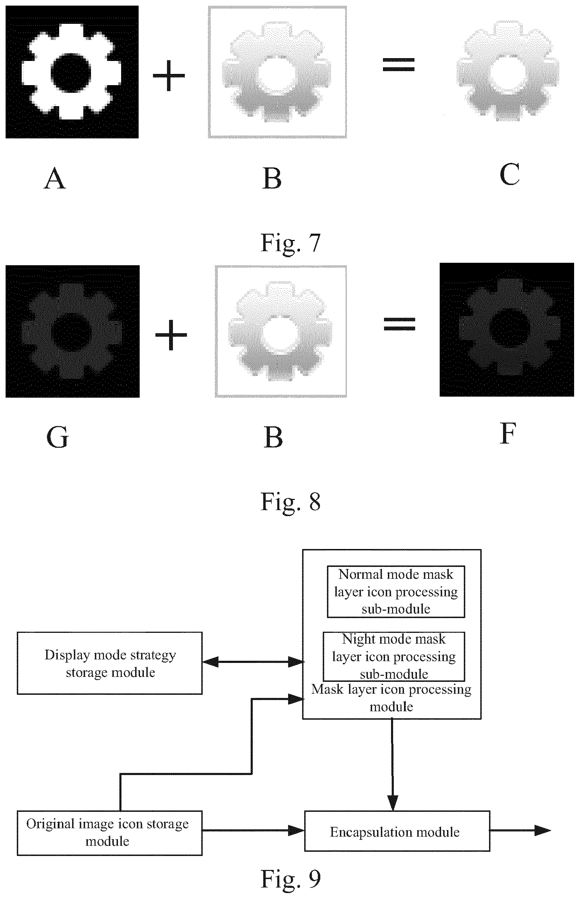

Referring to figure 7, figure 7 is a schematic diagram illustrating a process for generating the display icon "set-up" in the normal mode in accordance with an embodiment of the present invention. In the figure, A is the mask layer icon in the normal mode, B is the original image icon and the C is the display icon in the normal mode. Different from figure 4, the mask layer icon in the normal mode in figure 7 is obtained by performing the translucent processing on the original image icon, while the mask layer icon in the normal mode in figure 4 is obtained by performing the color processing and image cut on the original image icon.

Referring to figure 8, figure 8 is a schematic diagram illustrating a process for generating the display icon "set-up" in the night mode in accordance with an embodiment of the present invention. In the figure, G is the mask layer icon in the night mode, B is the original image icon and F is the display icon in the night mode. Different from figure 5, the mask layer icon in the night mode in figure 8 is obtained by performing the translucent processing on the original image icon. The original image icon in the night mode and the original image icon in the normal mode use the same icon. While the mask layer icon in the night mode and the original image icon in the night mode in figure 5 are obtained by performing the color processing and image cut on the original image icon in the normal mode.

In can be seen from the above that in the method for implementing the generic icon with multiple modes provided by the embodiments of the present invention, the original image icon in the BMP format is preset and stored. The translucent processing is performed on the original image icon according to the preset display mode, and mask layer icons satisfying the requirements of each display mode are obtained and stored. The stored original image icon and the mask layer icons obtained by the translucent processing are encapsulated into the skin installation package and sent out. Therefore, the translucent processing is respectively performed on the original image icon according to the display modes, and the mask layer icons in the night mode and the day mode may be obtained by performing the transparent processing on the original image icon. And the original image icon in the night mode may share the same original image icon with the original image icon in the day mode, which reduces the number of the images in the software installation package, reduces the capacity of the installation package, saves the overhead of the wireless network resources, and effectively reduces the cost of the downloading made by the user. Meanwhile, it is avoided that the images consume too much running memory of the mobile terminal device, and the program is easy to be used.

Referring to figure 9, figure 9 is a schematic diagram illustrating structure of a device for implementing a generic icon with multiple display modes. The device includes an original image icon storage module, a display mode strategy storage module, a mask layer icon processing module and an encapsulation module.

The original image icon storage module is to store the obtained original image icons in BMP format.

The display mode strategy storage module is to store each preset display mode strategy.

In this embodiment, the display mode strategy is a corresponding relationship between a display icon obtained by calculation and original image icon transparency. That is, after performing the translucent processing on the original image icon according to the corresponding relationship and the calculation, the obtained display icon may satisfy the users' comfort demands.

The mask layer icon processing module is to perform the translucent processing on the original image icon read from the original image icon storage module according to each display mode strategy stored in the display mode strategy storage module, obtain the mask layer icons satisfying each display mode demand, and transmit the mask layer icons to the encapsulation module.

The encapsulation module is to encapsulate the original image icon stored in the original image icon storage module and the received mask layer icon, and send out.

After receiving the skin installation package, the mobile terminal device respectively performs calculation on the original image icon and the mask layer icon corresponding to a display mode, and obtains the display mode corresponding to the display mode.

In this embodiment of the present invention, the mask layer icon processing module includes a normal mode mask layer icon processing sub-module and a night mode mask layer icon processing sub-module.

The normal mode mask layer icon processing sub-module is to perform the translucent processing on the original image icon read from the original image icon storage module according to a normal display mode strategy stored in the display mode strategy storage module, obtain a mask layer icon in a normal mode, and send the mask layer icon in the normal mode to the encapsulation module.

The night node mask layer icon processing sub-module is to perform the translucent processing on the original image icon read from the original image icon storage module according to a night display mode strategy stored in the display mode strategy storage module, obtain a mask layer icon in a night mode, and send the mask layer icon in the night mode to the encapsulation module.

The foregoing description only describes preferred embodiments of the present invention and is not used for limiting the protection scope thereof. Any modification, equivalent substitution, or improvement made without departing from the principle of the present invention should be covered by the protection scope of the present invention.

## Claims

1. A method for implementing a generic icon with multiple display modes, comprising:

   presetting (601) an original image icon in a Bitmap format;
   performing (602) translucent processing on the original image icon according to preset display modes, and obtaining mask layer icons satisfying requirements of each of the display modes; and
   encapsulating (603) the original image icon and the mask layer icons obtained by the translucent processing into a skin installation package; receiving, by a mobile terminal device, the skin installation package, performing calculation on the original image icon and the mask layer icons corresponding to each of the display modes, and obtaining a display icon corresponding to the each of the display modes, wherein a background of the original image icon is configured as white, and the white is defined as full-transparent, wherein the display modes comprise a normal mode and a night mode, wherein performing the translucent processing on the original image icon comprises:

   reading the stored original image icon, adjusting transparency of the original image icon to make an image effect meet user's requirements of viewing an image in the normal mode, obtaining a mask layer icon in the normal mode, setting a background as black, and defining the black as full-transparent; and
   reading the stored original image icon, adjusting the transparency of the original image icon, to make it suitable for a brightness of a display icon in the night mode and to make an image effect meet user's requirements of viewing the image in the night mode, obtaining a mask layer icon in the night mode, and setting a background as the black, wherein an image is gray after the translucent processing, wherein the original image icon in the night mode shares the same original image icon with the original image icon in the day mode, wherein images in the skin installation package comprise: the original image icon, the mask layer icon in the normal mode and the mask layer icon in the night mode, wherein performing the calculation on the original image icon and the mask layer icons corresponding to each of the display modes, and obtaining the display icon corresponding to each of the display modes comprises:

reading the original image icon and a mask layer icon in a normal mode obtained by performing the translucent processing on the original image icon, performing the calculation, and obtaining a display icon in the normal mode; and

reading the original image icon and a mask layer icon in a night mode obtained by performing the translucent processing on the original image icon, performing the calculation, and obtaining the display icon in the night mode.

## Patentansprüche

1. Verfahren zum Implementieren eines generischen Symbols mit mehreren Anzeigemodi, umfassend:

Voreinstellen (601) eines ursprünglichen Bildsymbols in einem Bitmap-Format;
Ausführen (602) einer transluzenten Verarbeitung des ursprünglichen Bildsymbols gemäß voreingestellter Anzeigemodi und Erhalten von Maskenebenensymbolen, die die Anforderungen jedes der Anzeigemodi erfüllen; und
Einkapseln (603) des ursprünglichen Bildsymbols und der durch die transluzente Verarbeitung erhaltenen Maskenebenensymbole in ein Hautinstallationspaket; Empfangen des Hautinstallationspakets durch ein mobiles Endgerät, Ausführen einer Berechnung an dem ursprünglichen Bildsymbol und den Maskenebenensymbolen, die jedem der Anzeigemodi entsprechen, und Erhalten eines Anzeigesymbols, das jedem der Anzeigemodi entspricht, wobei ein Hintergrund des ursprünglichen Bildsymbols als weiß konfiguriert ist und das Weiß als volltransparent definiert ist, wobei die Anzeigemodi einen Normalmodus und einen Nachtmodus umfassen, wobei das Ausführen der transluzenten Verarbeitung an dem ursprünglichen Bildsymbol umfasst:

Lesen des gespeicherten ursprünglichen Bildsymbols, Einstellen der Transparenz des ursprünglichen Bildsymbols, um einen Bildeffekt zu erzeugen, der Anforderungen eines Benutzers beim Betrachten eines Bildes im Normalmodus entspricht, Erhalten eines Maskenebenensymbols im Normalmodus, Einstellen eines Hintergrunds als schwarz und Definieren des Schwarz als volltransparent; und
Lesen des gespeicherten ursprünglichen Bildsymbols, Einstellen der Transparenz des ursprünglichen Bildsymbols, um es für eine Helligkeit eines Anzeigesymbols im Nachtmodus geeignet zu machen und um einen Bildeffekt zu erzeugen, der den Anforderungen des Benutzers an das Betrachten des Bildes im Nachtmodus entspricht, Erhalten eines Maskenebenensymbols im Nachtmodus und Einstellen eines Hintergrunds als das Schwarz, wobei ein Bild nach der transluzenten Verarbeitung grau ist, wobei das ursprünglichen Bildsymbol im Nachtmodus dasselbe ursprüngliche Bildsymbol mit dem ursprünglichen Bildsymbol im Tagmodus teilt, wobei Bilder in dem Hautinstallationspaket umfassen: das ursprüngliche Bildsymbol, das Maskenebenensymbol im Normalmodus und das Maskenebenensymbol im Nachtmodus, wobei das Ausführen der Berechnung an dem ursprünglichen Bildsymbol und den Maskenebenensymbolen entsprechend jedem der Anzeigemodi und das Erhalten des Anzeigesymbols entsprechend jedem der Anzeigemodi umfasst:

Lesen des ursprünglichen Bildsymbols und eines Maskenebenensymbols in einem der durch Ausführen der transluzenten Verarbeitung an dem ursprünglichen Bildsymbol erhaltenen Normalmodus, Ausführen der Berechnung und Erhalten eines Anzeigesymbols in dem Normalmodus; und
Lesen des ursprünglichen Bildsymbols und eines Maskenebenensymbols in einem durch Ausführen der transluzenten Verarbeitung an dem ursprünglichen Bildsymbol erhaltenen Nachtmodus, Ausführen der Berechnung und Erhalten des Anzeigesymbols in dem Nachtmodus.

**EP 2 669 792 B1**

**Revendications**

1. Procédé de mise en oeuvre d'une icône générale avec plusieurs modes d'affichage, consistant à:

> prédéfinir (601) une image originale dans un format matriciel;
> effectuer (602) un traitement translucide sur l'icône de l'image originale conformément aux modes d'affichage prédéfinis, et obtenir des icônes de couche de masque remplissant les exigences de chacun des modes d'affichage; et
> encapsuler (603) l'icône d'image originale et les icônes de couche de masque obtenues par le traitement translucide dans un paquet d'installation d'habillage; recevoir, par un dispositif de terminal mobile, le paquet d'installation d'habillage, effectuer le calcul sur l'icône de l'image d'origine et les icônes de couche de masque correspondant à chacun des modes d'affichage, et obtenir une icône d'affichage correspondant à chacun des modes d'affichage, dans lequel un arrière-plan de l'icône de l'image d'origine est configuré comme blanc, et le blanc est défini comme entièrement transparent, dans lequel les modes d'affichage comprennent un mode normal et un mode nuit, dans lequel la réalisation du traitement translucide sur l'icône de l'image d'origine consiste à:

>> lire l'icône de l'image originale stockée, régler la transparence de l'icône de l'image originale de manière à ce qu'un effet d'image remplisse les exigences de de visualisation de l'utilisateur d'une image dans le mode normal, obtenir une icône de couche de masque dans le mode normal, définir un arrière-plan comme noir, et définir le noir comme étant entièrement transparent; et
>> lire l'icône de l'image originale stockée, régler la transparence de l'icône de l'image originale, pour la rendre appropriée pour une luminosité d'une icône d'affichage dans le mode nuit et de manière à ce qu'un effet d'image remplisse les exigences de visualisation de l'utilisateur de l'image dans le mode nuit, obtenir une icône de couche de masque dans le mode nuit, et régler un arrière-plan comme étant le noir, dans lequel une image est grise après le traitement translucide, dans lequel l'icône de l'image originale dans le mode nuit partage la même icône de l'image d'origine avec l'icône de l'image d'origine dans le mode jour, dans lequel les images dans le paquet d'installation d'habillage comprennent: l'icône de l'image d'origine, l'icône de couche de masque dans le mode normal et l'icône de couche de masque dans le mode nuit, dans lequel la réalisation du calcul sur l'icône de l'image d'origine et les icônes de couche de masque correspondant à chacun des modes d'affichage, et l'obtention de l'icône d'affichage correspondant à chacun des modes d'affichage consiste à:

> lire l'icône de l'image d'origine et une icône de couche de masque dans un mode normal obtenue par la réalisation du traitement translucide sur l'icône de l'image d'origine, réaliser le calcul, et obtenir une icône d'affichage dans le mode normal; et
> lire l'icône d'image de l'origine et une icône de couche de masque dans un mode normal nuit obtenue par la réalisation du traitement translucide sur l'icône de l'image d'origine, réaliser le calcul, et obtenir l'icône d'affichage dans le mode nuit.

| | | | |
|---|---|---|---|
| ☆ Bookmark | 🕐 History | 🔧 Tool | ⚙ Set-up |
| ⬇ Download | ❓ Help | ⏻ Exist | |

Fig. 1

| | | | |
|---|---|---|---|
| ☆ Bookmark | 🕐 History | 🔧 Tool | ⚙ Set-up |
| ⬇ Download | ❓ Help | ⏻ Exist | |

Fig. 2

| | |
|---|---|
| Preset and store an original image icon in a normal mode | 301 |
| Perform color adjustment on the original image icon in the normal mode, obtain and store a mask layer icon in the normal mode | 302 |
| Perform the calculation on the original image icon in the normal mode and the mask layer icon in the normal mode, and obtain a display icon in the normal mode | 303 |

Fig. 3

A + B = C

Fig. 4

D + E = F

Fig. 5

| | |
|---|---|
| Preset an original image icon in a Bitmap format | 601 |
| perform translucent processing on the original image icon according to preset display modes, obtain mask layer icons satisfying requirements of each of the display modes | 602 |
| encapsulate the original image icon and the mask layer icon obtained by translucent processing as a skin installation package, send out the skin installation package | 603 |
| receive the skin installation package, perform calculation on the original image icon and a mask layer icon corresponding to each of the display modes, and obtain a display icon corresponding to each of the display modes | 604 |

Fig. 6

A　　　　　　　B　　　　　　　C

Fig. 7

G　　　　　　　B　　　　　　　F

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6118427 A